# EUROPÄISCHE PATENTANMELDUNG

(11) **EP 1 640 636 A2**
(43) Veröffentlichungstag der Anmeldung: **29.03.2006**
(21) Anmeldenummer: 05020444.5
(22) Anmeldetag: 20.09.2005
(51) Int. Cl.: F16H 7/12

(54) **Riemenspannvorrichtung mit hoher Dämpfung**

(30) Priorität: 28.09.2004 DE 102004047422
(71) Anmelder: Muhr und Bender KG, 57439 Attendorn (DE)
(72) Erfinder: Jung, Manfred, 56457 Westerburg (DE); Pfeifer, Simon, 58840 Plettenberg (DE); Jud, Joachim, 57567 Daaden (DE); Berndt, Thomas, 56472 Hof (DE); Asbeck, Jochen, 57439 Attendorn (DE); Berger, Rudolf, 52152 Simmerath (DE)
(74) Vertreter: Neumann, Ernst Dieter

(57) **Zusammenfassung**

Riemenspannvorrichtung mit einem im wesentlichen zylindrischen Aufnahmegehäuse 11 und einer darin koaxial einliegenden Nabe 12, wobei Aufnahmegehäuse 11 und Nabe 12 gegeneinander drehbar gelagert sind und mit einer schraubenförmigen Torsionsfeder 13 gegeneinander mit Vorspannung abgestützt sind, sowie mit einer Dämpfungsvorrichtung, die eine am Umfang geschlitzte Dämpfungsbuchse 16 und eine an die Dämpfungsbuchse 16 angepaßte Bandfeder 14 umfaßt, wobei die Dämpfungsbuchse 16 am Aufnahmegehäuse 11 innen anliegt, wobei die Bandfeder 14 zwischen Dämpfungsbuchse 16 und Torsionsfeder 13 einliegt und wobei die Bandfeder 14 und die Torsionsfeder 13 in Reihe geschaltet sind, so daß sich eine von beiden am Aufnahmegehäuse 11 und die andere von beiden an der Nabe 12 abstützt.

## Beschreibung

Die Erfindung betrifft eine Riemenspannvorrichtung mit einem im wesentlichen zylindrischen Aufnahmegehäuse und einer darin koaxial einliegenden Nabe, wobei Aufnahmegehäuse und Nabe gegeneinander drehbar gelagert sind und mit einer schraubenförmigen Torsionsfeder gegeneinander mit Vorspannung abgestützt sind, sowie mit einer Dämpfungsvorrichtung, die eine am Umfang geschlitzte Dämpfungsbuchse und eine an die Dämpfungsbuchse angepaßte Bandfeder umfaßt.

Eine Riemenspannvorrichtung dieser Art ist beispielsweise aus der DE 101 31 916 A1 bekannt. Hierbei umschließt die Bandfeder die Dämpfungsbuchse, wobei beide mit Abstand von der schraubenförmigen Torsionsfeder angeordnet sind, die auf einem größeren Radius liegt und zum einen mit dem Aufnahmegehäuse und zum anderen mit der Nabe verdrehgesichert verbunden ist. Die Federkraft der Torsionsfeder wird über einen Rollenträger und eine Rolle als Vorspannkraft auf einen Spannriemen übertragen, wobei der Dämpfungsmechanismus die Aufgabe erfüllt, das FederMasse-System zu beruhigen und unerwünschte Riemenschwingungen zu vermeiden. Die Dämpfung ist hierbei deutlich asymmetrisch, wobei sich bei sich zuziehender Bandfeder eine höhere Dämpfung und bei sich öffnender Bandfeder eine geringere Dämpfung einstellt. Die Riemenspannvorrichtung der genannten Art kann hierbei in vielen Fällen zufriedenstellende Dämpfungsraten liefern. Ungeachtet dessen ist es die Aufgabe der vorliegenden Erfindung, eine Riemenspannvorrichtung vorzuschlagen, die bei äußerst kompakter Bauweise eine besonders hohe Dämpfung sicherstellt. Dies ist insbesondere beim gegenwärtigen Trend zu aufgeladenen Motoren mit kleinem Hubraum, verbunden mit sehr hoher Leistung und großer Drehungleichförmigkeit an der Kurbelwelle, dringend erforderlich.

Die Lösung hierfür besteht in einer Riemenspannvorrichtung der eingangs genannten Art, die sich dadurch auszeichnet, daß die Dämpfungsbuchse am Aufnahmegehäuse innen anliegt, daß die Bandfeder zwischen Dämpfungsbuchse und Torsionsfeder einliegt und daß die Bandfeder und die Torsionsfeder in Reihe geschaltet sind, wobei sich eine der beiden Federn am Aufnahmegehäuse und die andere der beiden Federn an der Nabe abstützt.

Mit den hiermit angegebenen Mitteln ergibt sich eine kompakte Bauform mit sehr kleinem Gehäusedurchmesser. lm Vergleich zu bekannten Lösungen ist hierbei nur eine geringe Anzahl von Bauteilen notwendig, so daß außerordentlich günstige Herstellungskosten anfallen. Die axiale Lage der Dämpfungsvorrichtung kann unterschiedlich gewählt werden, so daß die Wärmeabfuhr entweder über den Gehäuseboden oder über einen Deckel an der Nabe erfolgen kann. Wie noch im Zusammenhang mit den Zeichnungen im einzelnen beschrieben werden soll, stützt sich ein freies Ende der schraubenförmigen Torsionsfeder spielfrei an einem abgewinkelten freien Ende der Bandfeder ab und bewirkt darüber eine Kraftübertragung in tangentialer Richtung, bezogen auf die Gehäuseachse, zur Erhöhung der radialen Anpreßkraft der Bandfeder gegenüber der Dämpfungsbuchse. Diese besteht bevorzugt aus Kunststoff. Die Bandfeder selbst ist so gestaltet, daß sie mit einer vorgegebenen berechneten Vorspannung eingesetzt wird und damit eine weitgehend konstante Radialkraft radial nach außen auf die Dämpfungsbuchse ausübt. Auch die vorgespannte Torsionsfeder ist radial aufgezogen und übt Radialkräfte auf die Dämfpungshülse aus. Die für die Dämpfung ausschlaggebende Gesamtreibung besteht somit aus zwei getrennt einstellbaren bzw. definierbaren Größen:
- der radialen und konstanten Federkraft der Bandfeder
- den Abstützkräften der schraubenförmigen Torsionsfeder.

Aufgrund der gewählten Anordnung von bewegten und feststehenden Bauteilen stellt sich eine bezüglich der Drehrichtung asymmetrische Dämpfungswirkung ein, wie dies von Riemenspannvorrichtungen nach dem Stand der Technik bekannt ist.

In der bevorzugten Ausführungsform wird das Aufnahmegehäuse Anschraubmittel zur Festlegung an einem Maschinenteil aufweisen und der um die Drehachse bewegliche Rollenträger mit der Nabe verbunden sein.

Hierbei ist vorzugsweise die Nabe einstückig mit einem Gehäusedeckel verbunden, der das Aufnahmegehäuse abschließt. Die Bandfeder kann mit einem Federende mittels einer an der Bandfeder angeformten Rastnase im Gehäusedeckel verrastet sein. Mit ihrem freien Ende stützt sich die Bandfeder, wie bereits erwähnt, am freien Ende der Torsionsfeder ab, die sich ihrerseits mit dem anderen Ende formschlüssig am Aufnahmegehäuse abstützt. Die beiden Federn sind unter Vorspannung eingebaut, wobei die relative Drehbewegung zwischen Nabe einerseits und Aufnahmegehäuse andererseits durch gegenseitige Anschlagmittel begrenzt wird. Diese Anschlagmittel sind insbesondere unmittelbar am Aufnahmegehäuse einerseits und an dem mit der Nabe verbundenen Gehäusedeckel andererseits ausgeführt. Zwischen Nabe und einem entsprechenden Lagerzapfen am Aufnahmegehäuse wird bevorzugt eine reibungsmindernde Lagerbuchse eingesetzt.

Mit einer Riemenspannvorrichtung der gezeigten Art ist es möglich, Dämpfungswerte von größer 50 % zu erreichen, d. h. der Amplitudenwert der Dämpfung (Nm) - bezogen auf die Federvorspannung in Nominalposition (Nm) - soll größer 50 % sein.

Ein bevorzugtes Ausführungsbeispiel einer erfindungsgemäßen Riemenspannvorrichtung ist in den Zeichnungen dargestellt und wird nachstehend beschrieben.
- Figur 1: zeigt ein Prinzipbild der Riemenspannvorrichtung im Querschnitt durch die Drehachse;
- Figur 2: zeigt eine erfindungsgemäße Riemenspannvorrichtung in Explosionsdarstellung in einer ersten Perspektive;
- Figur 3: zeigt eine erfindungsgemäße Riemenspannvorrichtung in Explosionsdarstellung in einer zweiten Perspektive;
- Figur 4: zeigt die Nabe und den Gehäusedeckel mit Spannrollenhalter als Einzelheit;
- Figur 5: zeigt eine erfindungsgemäße Riemenspannvorrichtung in montierter Form in einem Teilschnitt.

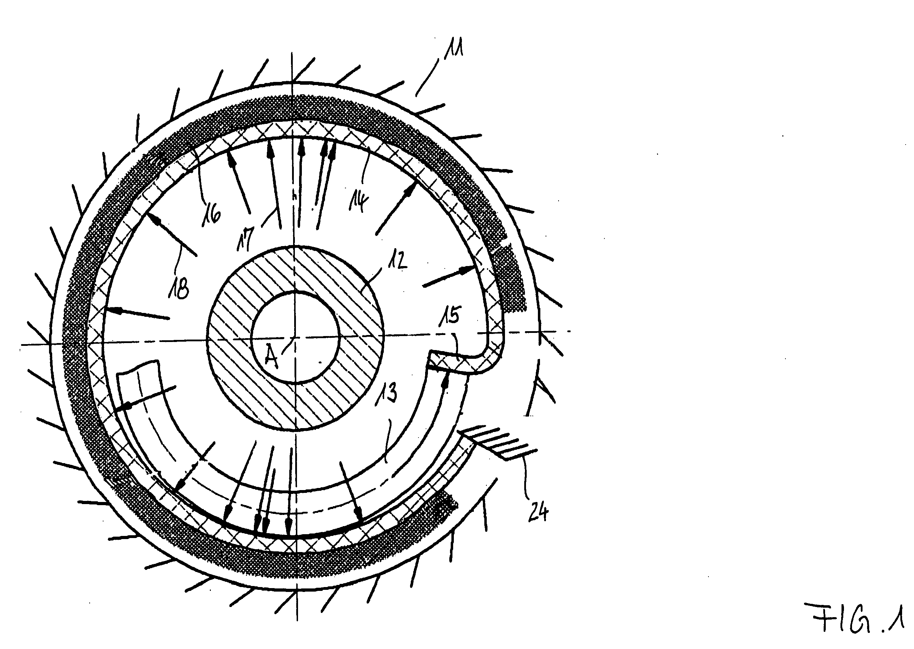

In Figur 1 ist die Riemenspannvorrichtung mit einem im wesentlichen zylindrischen Aufnahmegehäuse 11 und einer in diesem einliegenden Nabe 12 gezeigt, die in Bezug auf eine Achse A konzentrisch zueinander und drehbar gegeneinander angeordnet sind. Die Nabe kann hierbei auf einem Zapfen gelagert sein, der unmittelbar mit dem Gehäuse verbunden ist. Aufnahmegehäuse 11 und Nabe 12 sind über eine schraubenförmige Torsionsfeder 13 gegeneinander vorgespannt, wobei nur ein freies Ende der Torsionsfeder gezeigt ist. Das andere nicht gezeigte Ende stützt sich verdrehgesichert im Aufnahmegehäuse 11 ab. Das freie Ende der Torsionsfeder 13, das erkennbar ist, stützt sich an einer Bandfeder 14 ab, deren freies Ende 15 nach innen umgebogen ist und deren anderes Ende verdrehgesichert an einem festen Teil 24 festgelegt ist, insbesondere einem Deckelteil, das mit der Nabe 12 fest verbunden ist. Torsionsfeder 13 und Bandfeder 14 sind auf diese Weise zwischen dem Aufnahmegehäuse 11 und der Nabe 12 in Reihe geschaltet. Die Federn sind hierbei vorgespannt, wobei sie radial aufgezogen, d. h. aufgeweitet sind. Außerhalb der Bandfeder 14 liegt eine Dämpfungshülse 16, die indirekt von der Torsionsfeder 13 und unmittelbar von der Bandfeder 14 radial beaufschlagt wird und die sich außen im Aufnahmegehäuse 11 abstützt. Mit längeren Pfeilen 17 sind die von der Torsionsfeder 13 auf die Dämpfungshülse 16 ausgeübten Kräfte dargestellt, die im wesentlichen auf zwei einander radial gegenüberliegenden Seiten wirken. Mit kürzeren Pfeilen 18 sind die im wesentlichen über dem Umfang gleich verteilten Kräfte der Bandfeder 14 auf die Dämpfungshülse 16 dargestellt.

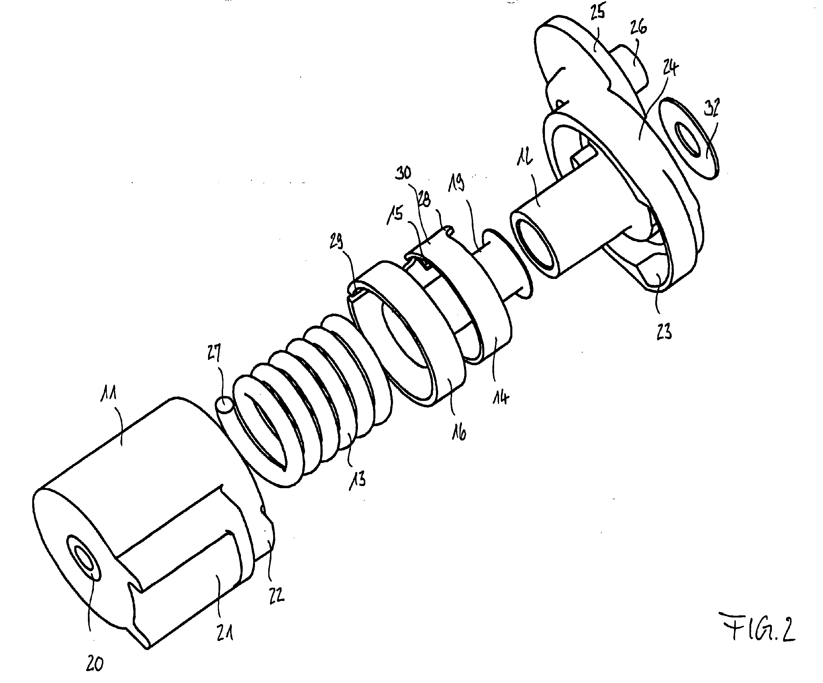

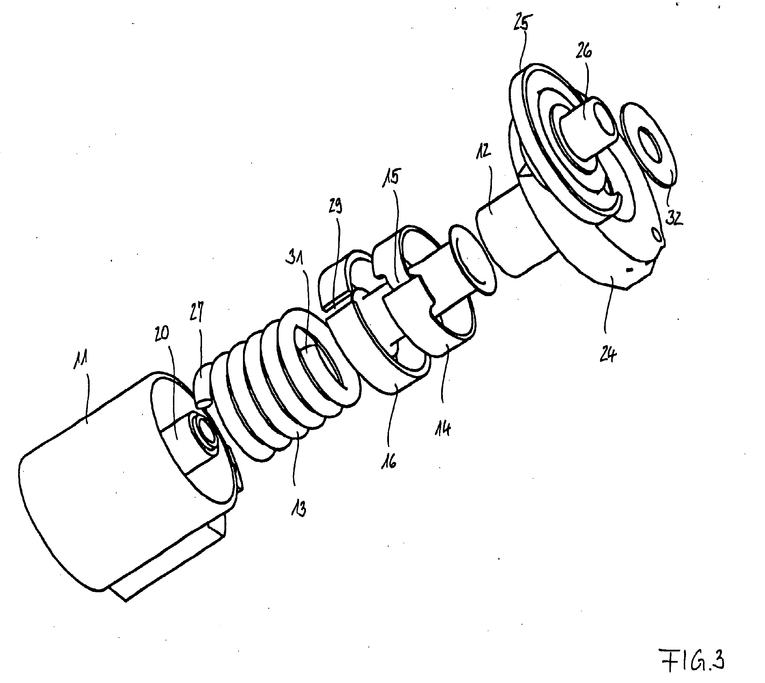

Die Figuren 2 und 3 werden nachstehend gemeinsam beschrieben. ln den Figuren sind gleiche Einzelheiten wie in Figur 1 mit gleichen Bezugsziffern belegt. Auf die Beschreibung wird insoweit Bezug genommen. Das Aufnahmegehäuse 11 in seiner Zylinderform ist deutlich erkennbar, ebenso die Nabe 12, die über eine Lagerhülse 19 auf einem in das Gehäuse 11 eingesetzten Zapfen 20 gelagert ist. Die Lagerhülse 19 ist hierbei zur Montage axial mittig geteilt (nicht erkennbar). Am Aufnahmegehäuse 11 sind Anschraub- und Befestigungsmittel 21 erkennbar. Weiterhin weist das Gehäuse 11 einen Drehanschlag 22 auf, der mit einer Innenausnehmung 23 an einem Deckel 24 zusammenwirkt, der einstückig mit der Nabe 12 verbunden ist. Auf diese Weise sind Gehäuse 11 und Nabe 12 begrenzt gegeneinander verdrehbar. An dem Deckel 24 und damit an der Nabe 12 ist ein Rollenträgerarm 25 mit einem Lagerzapfen 26 einstückig angeformt. Auf letzterem ist eine Spannrolle lagerbar. Eine Scheibe 32 dient zur gegenseitigen axialen Sicherung nach dem Zusammenbau. Mit dem Deckel 24 und damit mit der Nabe 12 ist die Bandfeder 14 über eine Nase 28, die an einem Ende 30 der Bandfeder 14 angeformt ist, im Drehsinn zu verrasten und festlegbar.

Das andere freie Ende 15 der Bandfeder 14 ist nach innen umgebogen. An diesem freien Ende 15 der Bandfeder 14 stützt sich die Torsionsfeder 13 mit ihrem hier nicht erkennbaren freien Ende ab, während das zweite Ende 27 der Torsionsfeder 13 drehfest im Aufnahmegehäuse 11 anliegt.

Außen um die Bandfeder 14 legt sich die Dämpfungshülse 16, an der ein Umfangsschlitz 29 erkennbar ist.

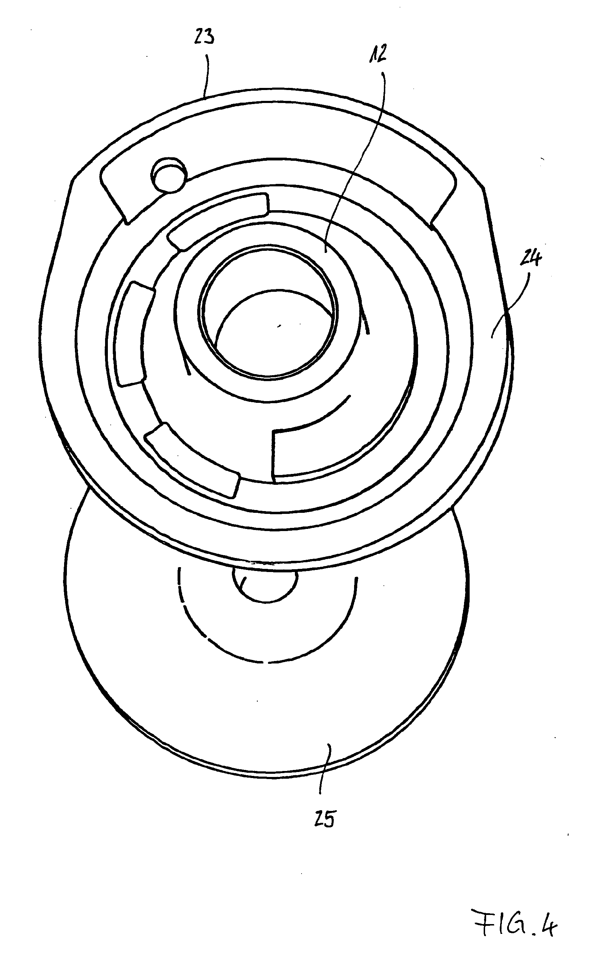

In Figur 4 ist die Nabe 12 mit dem angeformten Deckel 24 erkennbar, wobei die Umfangsausnehmung 23, die den Drehanschlag mit dem Gehäuse bildet, ebenfalls sichtbar wird. Weiterhin ist der Spannrollenarm 25 mit einer exzentrischen Lagerstelle für die Spannrolle erkennbar.

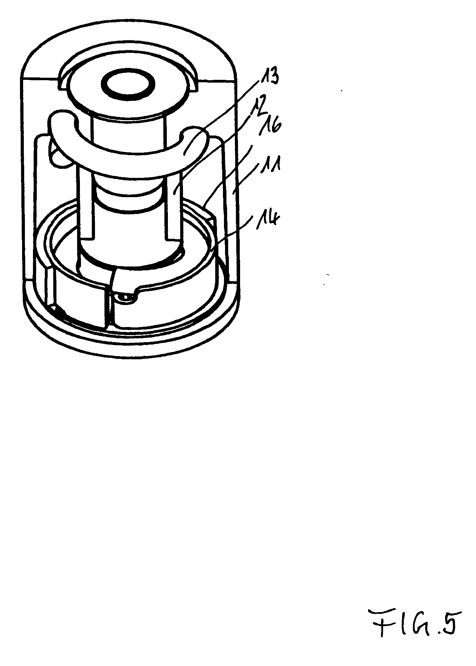

In Figur 5 sind gleiche Einzelheiten wie in den Figuren 1 bis 4 mit gleichen Bezugsziffern bezeichnet. Insbesondere ist hier die ineinanderliegende Anordnung von Gehäuse 11, Dämpfungshülse 16, Bandfeder 14, Torsionsfeder 13 und Nabe 12 (von außen nach innen) nachvollziehbar.

### Bezugszeichenliste

- 11: Aufnahmegehäuse
- 12: Nabe
- 13: Torsionsfeder, schraubenförmig
- 14: Bandfeder
- 15: Federende
- 16: Dämpfungshülse
- 17: Kraftpfeil
- 18: Kraftpfeil
- 19: Lagerhülse
- 20: Lagerzapfen
- 21: Anschraubmittel
- 22: Nase
- 23: Innenausnehmung
- 24: Deckel
- 25: Rollenträger
- 26: Lagerzapfen
- 27: Federende
- 28: Federnase
- 29: Umfangsschlitz
- 30: Federende
- 31: Federende
- 32: Sicherungsscheibe

## Patentansprüche

1. Riemenspannvorrichtung mit einem im wesentlichen zylindrischen Aufnahmegehäuse (11) und einer darin koaxial einliegenden Nabe (12), wobei Aufnahmegehäuse (11) und Nabe (12) gegeneinander drehbar gelagert sind und mit einer schraubenförmigen Torsionsfeder (13) gegeneinander mit Vorspannung abgestützt sind, sowie mit einer Dämpfungsvorrichtung, die eine am Umfang geschlitzte Dämpfungsbuchse (16) und eine an die Dämpfungsbuchse (16) angepaßte Bandfeder (14) umfaßt,
**dadurch gekennzeichnet,**
**daß** die Dämpfungsbuchse (16) am Aufnahmegehäuse (11) innen anliegt,
**daß** die Bandfeder (14) zwischen Dämpfungsbuchse (16) und Torsionsfeder (13) einliegt und
**daß** die Bandfeder (14) und die Torsionsfeder (13) in Reihe geschaltet sind, wobei sich eine von beiden am Aufnahmegehäuse (11) und die andere von beiden an der Nabe (12) abstützt.

2. Vorrichtung nach Anspruch 1,
**dadurch gekennzeichnet,**
**daß** das Aufnahmegehäuse (11) Anschraubmittel (21) aufweist und daß mit der Nabe (12) ein Rollenträger (25) verbunden ist.

3. Vorrichtung nach einem der Ansprüche 1 oder 2,
**dadurch gekennzeichnet,**
**daß** die Nabe (12) einstückig mit einem Gehäusedeckel (24) verbunden ist, der das Aufnahmegehäuse (11) abschließt.

4. Vorrichtung nach einem der Ansprüche 1 bis 3,
**dadurch gekennzeichnet,**
**daß** die Bandfeder (14) mit einem Bandende (30) im Gehäusedeckel (24) verrastet ist.

5. Vorrichtung nach einem der Ansprüche 1 bis 4,
**dadurch gekennzeichnet,**
**daß** die Bandfeder (14) sich mit ihrem freien Federende (15), das nach innen abgebogen ist, am freien Ende (31) der Torsionsfeder (13) abstützt.

6. Vorrichtung nach einem der Ansprüche 1 bis 5,
**dadurch gekennzeichnet,**
**daß** die Torsionsfeder (13) mit ihrem einen Ende (27) formschlüssig im Aufnahmegehäuse (11) abgestützt ist.

7. Vorrichtung nach einem der Ansprüche 1 bis 6,
**dadurch gekennzeichnet,**
**daß** im Aufnahmegehäuse (11) ein Lagerzapfen (20) angeordnet ist, auf dem die Nabe (12) gelagert ist.

8. Vorrichtung nach Anspruch 7,
**dadurch gekennzeichnet,**
**daß** zwischen dem Lagerzapfen (20) und der Nabe (12) eine Lagerbuchse (19) angeordnet ist.
